# EUROPEAN PATENT SPECIFICATION

(11) **EP 1 467 619 B1**
(45) Date of publication and mention of the grant of the patent: **17.08.2005**
(21) Application number: 03731749.2
(22) Date of filing: 20.01.2003
(51) Int. Cl.: A01M 31/00

(54) **INSECT MONITOR**
INSEKTENMONITOR
DISPOSITIF DE CONTROLE DE POPULATIONS D'INSECTES

(30) Priority: 22.01.2002 GB 0201345
(43) Date of publication of application: 20.10.2004
(73) Proprietor: Killgerm Chemicals Limited, Ossett WF5 9NA (GB)
(72) Inventor: HOYES, Paul, Grantham, Lincolnshire NG31 7JD (GB)
(74) Representative: Stuttard, Garry Philip
(86) International application number: PCT/GB2003/000228
(87) International publication number: WO 2003/061377

(56) References cited:
- US-A- 4 709 503
- US-A- 5 722 199
- US-B1- 6 202 339

## Description

The present invention relates to insect monitors, in particular, the invention relates to insect monitors which incorporate insect attractant sheets.

Insect monitors have become widely used in many areas where the issue of hygiene is important. In particular, they are often highly prevalent in the food industry, whether it be in factories where food production is taking place, or in restaurants or other food outlets where food is stored and prepared. Insect monitors have also been used in the healthcare industry, for example in hospitals, to prevent the risk of ingress of infection by means of insects in to relatively clean or sterile areas.

Insect monitors are placed in various locations in food production or preparation areas or in other clean and/or sterile areas. Existing insect monitors usually consist of some form of box having a hinged lid and apertures which allow insects to access the interior of the box. An insect attracting sheet having an upper surface covered with glue is located in the box. In most cases the insect attracting sheet incorporates an insect attractant. The insect attractant may be a general attractant which attracts a range of insects to the insect monitoring station or, a species specific pheromone or attractant selected to lure a particular species of insect in to the box through the apertures. The glue or sticky compound traps the insect on the sheet which remain on the sheet and eventually die.

At selected times, pest control operatives open the monitors to find out which insects have been attracted and the number attracted in a predetermined time interval thus giving an indication of the type of insects present in the area and the level of infestation. Once the type or types of insect in the area of interest have been identified the pest control operatives can determine the type of action to take to remedy the situation i.e. which chemicals are required to control particular species.

In order to carry out an effective monitoring regime the operatives must open the monitoring stations to observe the contents. In doing so it is often necessary to remove the insect attracting sheet from the monitor to view the captured insects closely for the purposes of insect identification and counting. As the sheets normally sit flat in a receptacle in the base of the insect monitor there exists a high risk that an operative will come into contact with the matter on the active surface of the sheet. Moreover, although the periphery of the upper surface is usually free of attractant and sticky material to trap insects, this margin may still have come into contact with an insect and as such represents a health hazard.

An object of the present invention is therefore to mitigate against the drawbacks of the prior art discussed above.

According to an aspect of the present invention there is provided an insect monitor comprising:
a base;
a lid hinged at one edge to the base, in which the lid can be displaced between an open position and a closed position; and
an insect attracting sheet received within the base; and
in which the lid includes at least one lifting member which can engage the insect attracting sheet while the lid is moved between its open and closed positions so that the distance between the sheet and the base is greater when the lid is in the open position than when it is in the closed position.

Lifting a portion of the insect attracting sheet away from the base enables pest control operatives to gain effective access to the sheet thereby reducing the risk of the operative touching contamination on the active surface of the sheet. The sheet may be presented to the operative at an angle which enables the operative to access the base of the sheet more freely. Tilting the sheet upwards slightly allows the operative to position their fingers underneath the sheet allowing the sheet to be lifted from the base of the monitor without the active surface coming into contact with the operatives fingers. In other embodiments the entire sheet may lifted away from the base thereby allowing the operative to touch the whole of non-active surface of the sheet. The present invention removes the need for the operative to press a finger or stick onto the surface to lift the sheet away from the base.

Preferably, the base includes a side wall which defines the space in which the insect attracting sheet is received.

In preferred embodiments, the side wall has a gap in it which is located so that the lifting member can move through the gap as the lid is moved between its open and closed positions.

Conveniently, an aperture is defined between the base and the lid when the lid is in the closed position. Preferably, the aperture extends substantially around the periphery of the base and lid. The aperture allows insects to enter the insect monitor either by flying in through the aperture or by walking in. Many prior art insect monitors have a fixed or 'live' hinge across one edge of the base and lid which prevents access to the interior of the insect monitor over around 90°.

The exterior surface of the side wall of the base may be of any suitable shape or orientation. The exterior surface of the side wall may be vertical, stepped, corrugated or contoured. Most preferably, the exterior surface of the wall of the base slope upwardly. Upwardly sloping walls allow insects to crawl up the walls attracted by the insect attractant sheet. Once they reach the top of the wall they fall in to the space defined by the wall.

In preferred embodiments, the interior surface of the side wall of the base are substantially vertical. Insects with feelers sense can often sense hostile surfaces using those feelers. The vertical interior surface of the wall therefore masks the tacky surface on to which the insects eventually fall. Once on the tacky surface the insects become stuck and cannot escape.

Preferably, at least two projecting members extend from the lid, said at least two projecting members adapted to cooperate with the at least one lifting member to support the insect attracting sheet as the lid is moved to the open position. The at least one lifting member supports the underside of the insect attracting sheet and the at least two projecting members lie above the upper surface of the sheet preventing it simply falling out or being flipped out by the action of the lifting member. The projecting members may also hold the insect attracting sheet in position when the insect monitor is in the closed position or simply prevent the sheet from moving upwards away from the base if the insect monitor is disturbed.

Preferably, the internal surface of the side wall is provided with at least one clip. Most preferably the at least one clip is located on the internal surface of a front portion of the side wall. A notch is defined between the at least one clip and the floor of the base which can accommodate a portion of the insect attracting sheet. The clips may be of any convenient shape. Most preferably the clips are semicircular.

Conveniently, a plurality of lifting members are provided.

An embodiment of the present invention will now be described, by way of example only, with reference to the accompanying drawings in which:
Figure 1 shows an insect monitor of the present invention in an open configuration;
Figure2 shows a rear view of the insect monitor of Figure 1;
Figure 3 shows a view of the lower side of the lid of the insect monitor of Figure 1;
Figure 4 shows a view of the base of the insect monitor of Figure 1;
Figure 5 shows a perspective view of the insect monitor of Figure 1 in a closed configuration;
Figure 6 shows a front view of the insect monitor of Figure 5 as viewed in the direction A; and
Figure 7 shows a side view of the insect monitor of Figure 5 as viewed in the direction B.

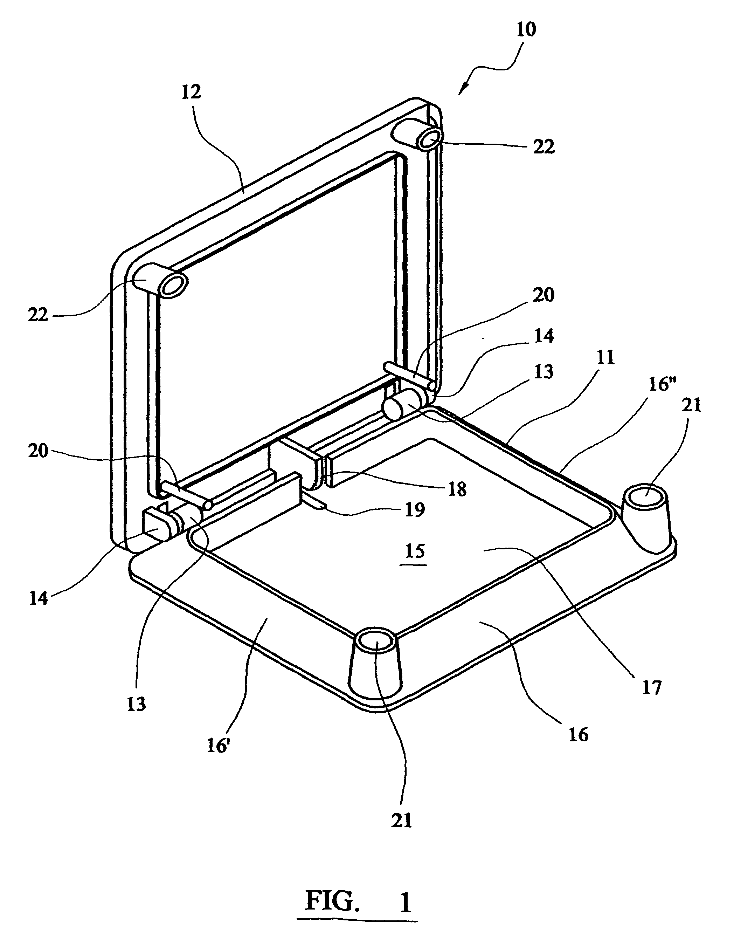

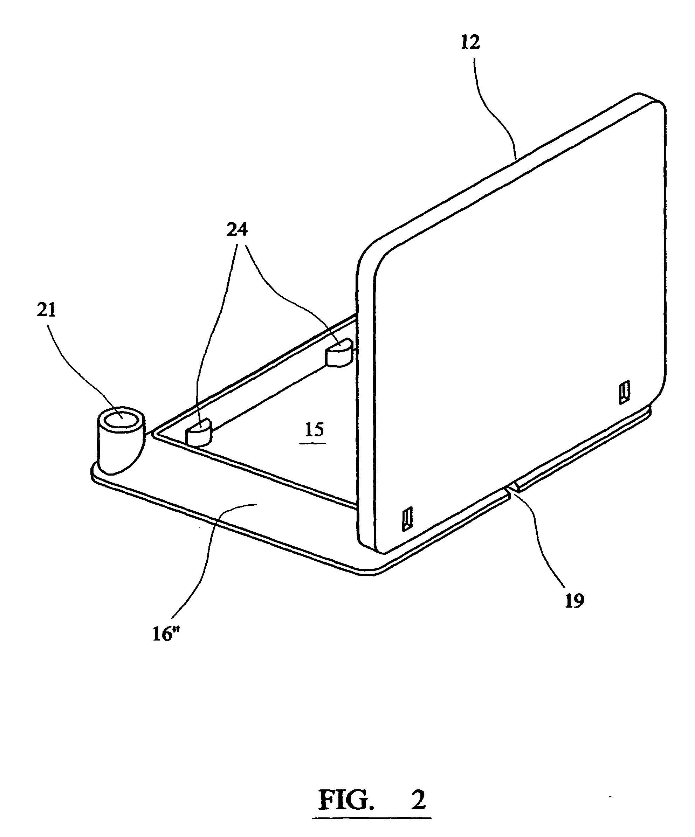

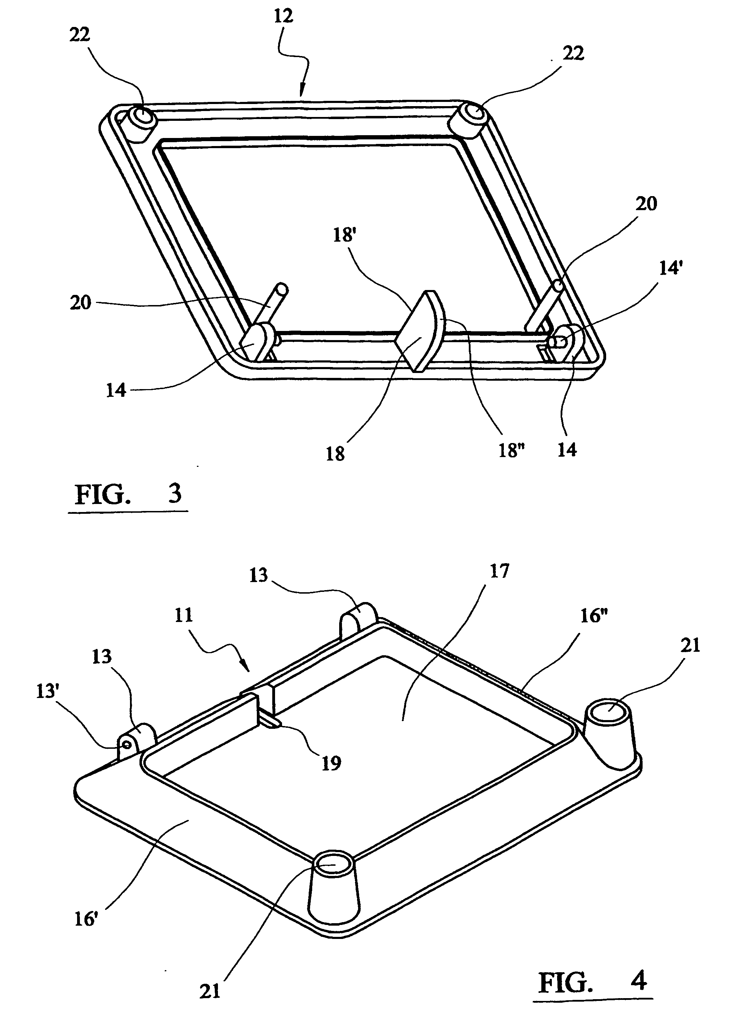

As shown in Figures 1 to 7 the insect monitor 10 of the present invention consists of a base 11 which is connected to a lid 12 by a hinge at the rear of the monitor. The hinge shown is a mechanical hinge and consists of a pair of projections 13 towards the rear of the base 11 and a corresponding pair of projections 14 towards the rear of the lid. Each of the projections 13 on the base 11 has a bearing 13' which receives a corresponding axle 14' on one of the projections from the lid 12.

The base 11 has an upright member which forms a side wall 16 defining a space 17 into which an insect attracting sheet (not shown) may be inserted. The insect attracting sheet lies on the floor 15 of the base 11 surrounded by the side wall. The side wall 16 has four interconnected sections and has an exterior surfacel6' which slopes upwardly and an interior surface 16" which is vertical. The front portion of the side wall 16 has two semicircular clips 24 which extend from the interior surface 16' into the space 17 which accommodates the sheet. These clips 24 are located above the floor 15 and each define a notch into which the front or leading edge of the sheet can be placed. The clips are positioned around 15 mm in from the respective interior corners of the base 11. The clips extend around 1 to 2 mm into the space 17.

The insect attracting sheet may be formed of card or lightweight plastic and have a tacky substance or glue on the upper or active surface. The tacky substance or glue incorporates an insect attractant. This insect attractant may be a general attractant designed to attract a variety of insects or a species specific attractant Insects are attracted to the sheet, adhere to it and in time, die. The majority of the upper surface of the sheet is covered in attractant and tacky material although a marginal border is provided to allow operatives to remove the sheet from the base 11.

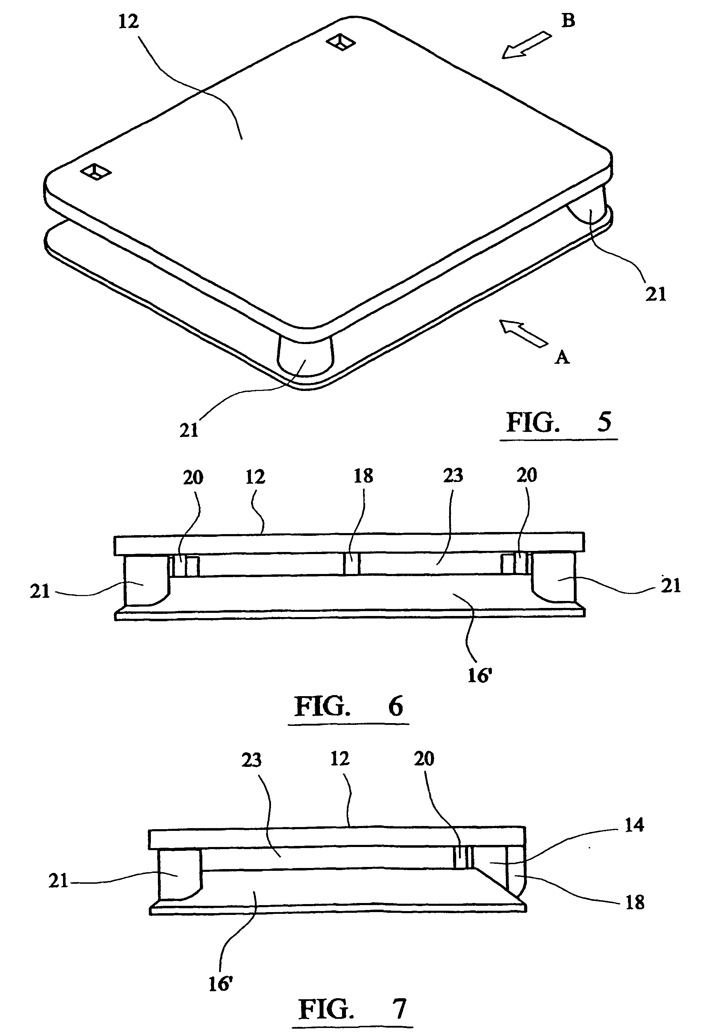

In use, the monitor sits in the closed configuration as shown in Figures 5, 6 and 7. Insects attracted to the sheet climb or crawl up the upwardly sloping exterior surface 16' of the side wall 16 of the base, through an aperture 23 between the base 11 and lid 12 and then fall on to the sheet. Flying insects may simply fly in to the insect monitor through the aperture 23 and alight on the sheet. The vertical interior walls 17 of the base 11 mask the drop on to the insect attracting sheet preventing insects with feelers becoming aware of the hostile surface. The insects then simply drop onto the sheet remaining stuck there until they die.

To carry out a monitoring inspection a pest control operative simply lifts the lid 12 at the front. As the lid 12 is lifted a lifting member 18 (shown as a fin in the figures) located in the centre of the lid towards the rear rotates in a corresponding gap 19 in the in the side wall 16 and floor 15. The lifting member 18 is integral with the lid 12. The lifting member 18 has a flat surface 18' and an arcuate surface 18" which extends between the junction of the lid 12 and flat surface 18'.

The flat surface 18' is vertical when the lid is closed but as the lid is raised the surface 18' catches the bottom of the sheet and tilts the rear of the sheet upwards away from the floor of the base 11. The clips 24 on the internal surface of the front wall retain the front of of the sheet which adopts a slanted configuration as the lid is lifted. This tilting enables a pest control operative to position fingers underneath the sheet to facilitate the removal of the sheet from the monitor for closer inspection.

A pair of locating pins 20 are also provided on the inner surface of the lid 12. These locating pins 20 are positioned over the upper or active surface of the sheet when the insect monitor is in the closed configuration and, in conjunction with the clips 24, prevent the sheet from being dislodged from the floor of the base if the monitor is disturbed. In the open configuration, as shown in Figure 1, the attractant sheet lies between the lifting member 18 and the locating pins 20 with the underside of the sheet abutting the flat surface 18' and the upper surface of the sheet touching the locating pins 20.

To replace the sheet or insert a fresh one an operative simply slides a front portion of the sheet under the clips 24 and a rear portion of a sheet between the flat surface 18' of the fin 18 and the locating pins 20. Upon closing the lid 12, the sheet settles down on to the floor 15 of the base 11. In addition to the locating pins 20, the front of the base 11 is also provided with a pair of hollow turrets 21 into which corresponding studs 22 on the lid 12 can be located. These studs 22 also help to support the lid 12 in the closed configuration.

## Claims

1. An insect monitor comprising:
a base;
a lid hinged at one edge to the base, in which the lid can be displaced between an open position and a closed position and in which an aperture is defined between the base and the lid when the lid is in the closed position, the aperture extending substantially around the periphery of the base and lid; and
an insect attracting sheet received within the base; and
in which the lid includes at least one lifting member which can engage the insect attracting sheet while the lid is moved between its open and closed positions so that the distance between the sheet and the base is greater when the lid is in the open position than when it is in the closed position.

2. An insect monitor according to claim lin which the base includes a side wall which defines the space in which the insect attracting sheet is received.

3. An insect monitor according to claim 2 in which the side wall has a gap in it which is located so that the lifting member can move through the gap as the lid is moved between its open and closed positions.

4. An insect monitor according to claim 2 or 3 in which the external surface of the wall of the base slopes upwardly.

5. An insect monitor according to any of claims 2 to 4 in which the internal surface of the wall of the base is substantially vertical.

6. An insect monitor according to any preceding claim in which at least two projecting members extend from the lid, said at least two projecting members being adapted to cooperate with the at least one lifting member to support the insect attracting sheet as the lid is moved to the open position.

7. An insect monitor according to claim to any of claims 2 to 6 in which the side wall is provided with at least one clip.

8. An insect monitor according to any preceding claim in which a plurality of lifting members are provided.

## Patentansprüche

1. Insektenmonitor, der Folgendes umfasst:
eine Basis;
einen Deckel, der an einer Kante an der Basis beweglich angelenkt ist, wobei der Deckel zwischen einer offenen Position und einer geschlossenen Position bewegt werden kann, und wobei eine Öffnung zwischen der Basis und dem Deckel gebildet wird, wenn sich der Deckel in der geschlossenen Position befindet, wobei sich die Öffnung im Wesentlichen um den Umfang des Bodens und des Deckels herum erstreckt; und
ein Insekten anlockendes Blatt, das in der Basis aufgenommen ist; und
wobei der Deckel wenigstens ein Hebeelement enthält, welches das Insekten anlockende Blatt ergreifen kann, während der Deckel zwischen seiner offenen und seiner geschlossenen Position bewegt wird, derart, dass der Abstand zwischen dem Blatt und der Basis größer ist, wenn der Deckel in der offenen Position ist, als wenn er in der geschlossenen Position ist.

2. Insektenmonitor nach Anspruch 1, wobei die Basis eine Seitenwand enthält, welche den Raum definiert, in dem das Insekten anlockende Blatt aufgenommen ist.

3. Insektenmonitor nach Anspruch 2, wobei sich in der Seitenwand ein Spalt befindet, der so angeordnet ist, dass sich das Hebeelement durch den Spalt hindurchbewegen kann, wenn der Deckel zwischen seiner offenen und seiner geschlossenen Position bewegt wird.

4. Insektenmonitor nach Anspruch 2 oder 3, wobei die Außenseite der Wand der Basis schräg nach oben verläuft.

5. Insektenmonitor nach einem der Ansprüche 2 bis 4, wobei die Innenseite der Wand der Basis im Wesentlichen vertikal verläuft.

6. Insektenmonitor nach einem der vorangehenden Ansprüche, wobei sich wenigstens zwei hervorstehende Elemente von dem Deckel erstrecken, wobei diese wenigstens zwei hervorstehenden Elemente so konfiguriert sind, dass sie mit dem wenigstens einen Hebeelement dergestalt zusammenwirken, dass das Insekten anlockende Blatt gehalten wird, wenn der Deckel in die offene Position bewegt wird.

7. Insektenmonitor nach einem der Ansprüche 2 bis 6, wobei die Seitenwand mit wenigstens einer Klemmschelle versehen ist.

8. Insektenmonitor nach einem der vorangehenden Ansprüche, wobei eine Mehrzahl von Hebeelementen vorhanden ist.

## Revendications

1. Dispositif de contrôle d'insectes comprenant :
une base ;
un couvercle relié par charnière à une arête de la base, dans laquelle le couvercle peut être déplacé entre une position ouverte et une position fermée et dans laquelle une ouverture est définie entre la base et le couvercle lorsque le couvercle est en position fermée, l'ouverture s'étendant essentiellement autour de la périphérie de la base et du couvercle ; et
une feuille attirant les insectes reçue dans la base ; et
dans lequel le couvercle comprend au moins un élément de levage qui peut engager la feuille attirant les insectes pendant que le couvercle est déplacé entre ses positions ouverte et fermée, de sorte que la distance entre la feuille et la base est plus importante lorsque le couvercle est en position ouverte que lorsqu'il est en position fermée.

2. Dispositif de contrôle d'insectes selon la revendication 1, dans lequel la base comprend une paroi qui définit l'espace dans lequel la feuille attirant les insectes est placée.

3. Dispositif de contrôle d'insectes selon la revendication 2, dans lequel la paroi possède un trou qui est situé de sorte que l'élément de levage peut se déplacer à travers le trou lorsque le couvercle est déplacé entre ses positions ouverte et fermée.

4. Dispositif de contrôle d'insectes selon la revendication 2 ou 3, dans lequel la surface externe de la paroi de la base est inclinée vers le haut.

5. Dispositif de contrôle d'insectes selon l'une quelconque des revendications 2 à 4, dans lequel la surface interne de la paroi de la base est principalement verticale.

6. Dispositif de contrôle d'insectes selon l'une quelconque des revendications précédentes dans lequel au moins deux éléments faisant saillie s'étendent à partir du couvercle, lesdits au moins deux éléments faisant saillie étant conçus pour coopérer avec au moins un élément de levage pour supporter la feuille attirant les insectes lorsque le couvercle est placé en position ouverte.

7. Dispositif de contrôle d'insectes selon l'une quelconque des revendications 2 à 6, dans lequel la paroi est prévue avec au moins une attache.

8. Dispositif de contrôle d'insectes selon l'une quelconque des revendications précédentes, dans lequel une pluralité d'éléments de levage est prévue.
